# FASCICULE DE BREVET EUROPEEN

(11) **EP 2 643 270 B1**
(45) Date de publication et mention de la délivrance du brevet: **13.06.2018**
(21) Numéro de dépôt: 11799151.3
(22) Date de dépôt: 24.11.2011
(51) Int. Cl.: C01B 33/141, C01B 33/142, C01F 7/34, C01F 7/36, C01G 23/053, C01G 25/02, C03C 17/25

(54) **PREPARATION DE SOLS D'OXYDES METALLIQUES STABLES, UTILES NOTAMMENT POUR LA FABRICATION DE FILMS MINCES A PROPRIETES OPTIQUES ET RESISTANTS A L'ABRASION**
HERSTELLUNG EINER STABILEN METALLOXIDSOLE ZUR VERWENDUNG INSBESONDERE FÜR DIE HERSTELLUNG VON DÜNNSCHICHTEN MIT OPTISCHEN UND ABRIEBFESTEN EIGENSCHAFTEN
PREPARATION OF STABLE METAL OXIDE SOLS, OF USE IN PARTICULAR FOR THE MANUFACTURE OF THIN FILMS HAVING OPTICAL AND ABRASION-RESISTANT PROPERTIES

(30) Priorité: 26.11.2010 FR 1059774
(43) Date de publication de la demande: 02.10.2013
(73) Titulaire: Commissariat à l'Énergie Atomique et aux Énergies Alternatives, 75015 Paris (FR)
(72) Inventeur: BELLEVILLE, Philippe, F-37000 Tours (FR); PRENE, Philippe, F-37260 Artannes sur Indre (FR); LE GUEVEL, Xavier, F-44410 Herbignac (FR)
(74) Mandataire: Ilgart, Jean-Christophe
(86) Numéro de dépôt international: PCT/EP2011/070905
(87) Numéro de publication internationale: WO 2012/069570

(56) Documents cités:
- EP-A1- 2 213 623
- WO-A1-2010/073772
- FR-A1- 2 703 791
- GB-A- 660 593
- GB-A- 1 362 250
- US-A1- 2002 090 519
- US-A1- 2009 046 379

## Description

### DOMAINE TECHNIQUE

La présente invention se rapporte à un procédé de préparation de sols, ou solutions colloïdales, d'oxydes métalliques, à composante aqueuse, qui sont stables dans le temps et qui permettent notamment de fabriquer des films minces présentant à la fois des propriétés optiques (antireflets, ...) et de résistance à l'abrasion remarquables.

L'invention se rapporte également à un procédé de fabrication de films à partir de ces sols et, en particulier, de films minces à propriétés optiques et résistants à l'abrasion.

De tels films trouvent une multitude d'applications, notamment dans la fabrication de composants optiques du type lentilles, hublots, écrans anti-débris, réseaux et lames de phase, destinés à entrer dans la constitution de lasers de puissance, dans la fabrication de fibres optiques, de tubes cathodiques et, d'une manière générale, de supports optiques transparents, ainsi que sur des substrats utilisés en micro-électronique dans lesquels une couche à faible constante diélectrique est requise (condensateurs, isolants, ...) .

### ÉTAT DE LA TECHNIQUE ANTÉRIEURE

La fabrication de films optiques par la technique sol-gel peut être réalisée selon deux voies de synthèse distinctes :
* la voie polymérique, qui consiste à élaborer une solution d'un matériau précurseur d'un oxyde métallique sous forme monomérique ou oligomérique qui est converti en oxyde après application sur un substrat. Cette solution vraie voit évoluer sa viscosité lors de l'évaporation du solvant et gélifie éventuellement sur la surface. La conversion en oxyde est généralement obtenue après un apport d'eau (hydrolyse ambiante) et un traitement thermique. Un film dense, à haut indice de réfraction et résistant mécaniquement, est ainsi obtenu mais la perte de masse implicite et le rétreint du film engendrent fréquemment des contraintes dans le dépôt.
* la voie colloïdale, où la conversion en oxyde est réalisée chimiquement en solution avant le dépôt sur le substrat. Les couches obtenues sont poreuses, à bas indice de réfraction, fragiles mécaniquement mais elles sont sans contraintes internes.

Pour la réalisation de films minces antireflets, on privilégie la voie de synthèse colloïdale qui offre, non seulement une plus grande facilité de mise en oeuvre (pas d'étape thermique), mais également de meilleures performances, notamment en ce qui concerne l'indice de réfraction des films obtenus.

Actuellement, cette voie de synthèse colloïdale est mise en oeuvre en milieu alcoolique comme cela est, par exemple, décrit dans la demande de brevet FR-A-2 703 791 [1].

Or, à une échelle industrielle, l'utilisation d'alcools génère des contraintes, notamment en termes de sécurité et de respect de l'environnement.

Il serait donc souhaitable de pouvoir réaliser des films antireflets à partir de sols d'oxydes métalliques aqueux ou, à tout le moins, en partie aqueux de sorte à réduire les quantités d'alcools utilisées à défaut de supprimer totalement l'utilisation d'alcools.

Or, le problème que posent, d'une manière générale, les sols d'oxydes métalliques préparés en milieu aqueux ou partiellement aqueux est leur absence de stabilité et leur difficulté à être déposés en films compte tenu de leur faible mouillabilité sur les surfaces.

La solution généralement préconisée pour stabiliser des particules métalliques présentes dans une phase aqueuse consiste à utiliser des agents stabilisants.

Ainsi, par exemple, Gulley et al. (Journal of Colloid and Interface Science, 241 (2001) 340-345, **[2]**) ont montré que l'utilisation de polyols à faible chaîne carbonée permet de stabiliser une silice colloïdale aqueuse très diluée (0,052% massique), même dans des conditions de pH élevé. Les polyols forment une cage de solvatation autour des particules de silice qui ralentit leur agrégation.

Neel et al. (Journal of Colloid and Interface Science, 230 (2000) 244-253, **[3]**) ont, eux, montré qu'il est possible d'obtenir un sol homogène de silice colloïdale, c'est-à-dire un sol dans lequel les particules de silice sont régulièrement dispersées, en y incorporant un surfactant tel qu'un oxyde de polyéthylène, qui joue le rôle d'agent fluidifiant et empêche les particules de silice de former des agrégats.

Par ailleurs, des sols aqueux de silice colloïdale, concentrés (à 30%, 40% en masse de silice), de différents pH et stabilisés par des agents de stabilisation tels que le sodium ou des chlorures, sont disponibles commercialement (Ludox™, Klebosol™, etc).

Toutefois, il s'avère que des sols aqueux d'oxydes métalliques qui renferment un ou plusieurs agents stabilisants ne peuvent pas être utilisés pour la réalisation de films minces antireflets car la présence d'agents stabilisants, quelle que soit leur nature, ne permet pas d'obtenir les propriétés optiques de transparence et les propriétés mécaniques requises pour ce type de films.

Les Inventeurs se sont donc fixé pour but de fournir un procédé qui permette de réaliser des sols d'oxydes métalliques aqueux ou partiellement aqueux qui soient stables pendant une période de plusieurs mois, voire d'une année, et ce, sans avoir recours à un quelconque agent stabilisant.

Or, dans le cadre des travaux qu'ils mènent depuis des années sur l'élaboration de films optiques, et en particulier de films minces antireflets, les Inventeurs ont constaté que, de manière tout à fait surprenante, il est possible de disposer de sols d'oxydes métalliques, aqueux ou à forte teneur en eau et présentant néanmoins une remarquable stabilité dans le temps, sous réserve que ces sols, d'une part, aient un pH supérieur ou égal à 8, et, d'autre part, soient préparés à partir de sols préalablement obtenus par hydrolyse-condensation de précurseurs de ces oxydes métalliques en milieu alcoolique, de pH neutre ou basique.

Ils ont constaté, de plus, que ces sols d'oxydes métalliques, aqueux ou à forte teneur en eau, présentent des propriétés physico-chimiques intrinsèques telles qu'ils permettent de fabriquer des films minces antireflets dont la résistance à l'abrasion est très nettement supérieure à celle de films minces obtenus à partir des sols alcooliques ayant servi à préparer ces sols aqueux ou à forte teneur en eau.

Et c'est sur ces constatations qu'est basée la présente invention. GB 660 593 décrit un procédé de préparation d'un sol de silice, aqueux et de pH supérieur à 8.

### EXPOSÉ DE L'INVENTION

L'invention a donc, en premier lieu, pour objet un procédé de préparation d'un sol d'un oxyde métallique, aqueux ou partiellement aqueux et de pH supérieur ou égal à 8, présentant une teneur massique en eau supérieure à 20%, lequel procédé comprend :
(a) l'hydrolyse d'un précurseur dudit oxyde métallique à un pH allant de 8 à 14, avantageusement de 9 ± 0,3, dans un alcool ou un mélange d'alcools additionné d'une base, par exemple de l'ammoniaque ou de la soude ;
(b) le mûrissement du sol obtenu à l'étape a) à température ambiante ;
(c) le remplacement par de l'eau de tout ou partie de l'alcool ou des alcools présents dans le sol basique obtenu à l'étape b), ce remplacement comprenant :
   (c₁) la dilution de ce sol par addition d'un mélange d'eau et d'un ou plusieurs alcools pour obtenir un sol hydroalcoolique, puis
   (c₂) la concentration du sol hydroalcoolique ainsi obtenu, dans des conditions qui permettent d'éliminer de ce sol tout ou partie de l'alcool ou des alcools qu'il renferme sans en éliminer l'eau, pour obtenir un sol aqueux ou partiellement aqueux ; et éventuellement
(d) l'ajustement du pH du sol aqueux ou partiellement aqueux ainsi obtenu à une valeur d'au moins 8.

Dans ce qui précède et ce qui suit, on entend par « *sol* », une solution colloïdale.

Par ailleurs, on entend par « *sol alcoolique* », un sol dont le solvant est un alcool ou un mélange d'alcools et qui ne contient pas d'eau, et par sol « *aqueux* », un sol dont le solvant est de l'eau et qui ne contient pas d'alcool.

Un sol dont le solvant est un mélange d'eau et d'alcool sera, donc, qualifié, dans ce qui suit, de *« partiellement* aqueux » ou d'« *hydroalcoolique ».*

A l'étape (c₁), l'alcool ou les alcools sont, de préférence, identiques à celui ou à ceux déjà présents dans le sol alcoolique.

Il est, par ailleurs, souhaitable que l'étape de concentration du sol hydroalcoolique soit réalisée dans des conditions telles que ce sol ne se transforme pas en un gel au cours de cette étape.

C'est la raison pour laquelle on préfère concentrer ce sol par évaporation de l'alcool ou des alcools dans un évaporateur rotatif, à une température allant de 20 à 55°C, par exemple de 40°C, et sous une pression allant de 20 à 200 mPa, par exemple de 100 mPa.

Il va de soi que le taux de dilution du sol alcoolique par le mélange eau/alcool(s), le rapport massique de l'eau à l'alcool ou aux alcools présents dans ce mélange et le niveau de concentration du sol hydroalcoolique sont choisis en fonction des teneurs massiques en eau et en oxyde métallique que doit présenter le sol aqueux ou partiellement aqueux que l'on souhaite préparer, compte tenu de la teneur massique en oxyde métallique que présente le sol alcoolique utilisé pour sa préparation.

On préfère utiliser de l'éthanol absolu comme alcool, et de l'ammoniaque (NH₄OH) comme base.

Par ailleurs, on préfère que le sol aqueux ou partiellement aqueux d'oxyde métallique soit un sol de silice, de zircone, d'alumine ou d'oxyde de titane et, en particulier, un sol de silice.

Aussi, le sol alcoolique est-il, de préférence, préalablement obtenu par hydrolyse-condensation d'un précurseur d'oxyde métallique de formule AₓM_{y} dans laquelle M représente un métal ou un métalloïde choisi parmi le silicium, le zirconium, l'aluminium et le titane, tandis que A représente un groupe hydrolysable, par exemple choisi dans le groupe comprenant un halogénure (comme un fluorure, chlorure, bromure ou iodure), un nitrate, un oxalate, un carbonate, un sulfate, un alcoolate de formule R-O⁻ où R est un groupe alkyle linéaire ou ramifié, comprenant de préférence de 1 à 10 atomes de carbone et, mieux encore, de 1 à 3 atomes de carbone, ou un groupe phényle.

Ainsi, des précurseurs d'oxyde métallique particulièrement préférés sont le tétraméthoxysilane, encore connu sous le nom de tétraméthylorthosilicate (TMOS), et le tétraéthoxysilane, encore connu sous le nom de tétraéthylorthosilicate (TEOS), qui conduisent à des sols de silice.

On préfère aussi que le sol aqueux ou partiellement aqueux d'oxyde métallique ait une teneur massique en oxyde métallique allant de 1 à 10% et, mieux encore, de 2 à 6%, une teneur massique en eau supérieure à 40% et un pH allant de 8 à 10 et, mieux encore, de 9 ± 0,3.

Le procédé décrit ci-dessus conduit à l'obtention de sols aqueux ou partiellement aqueux d'oxyde métallique, dont la viscosité varie au plus de ± 35% sur une période de temps d'au moins un an.

L'invention a aussi pour objet un procédé de fabrication d'un film, lequel procédé comprend le dépôt sur un substrat d'une ou plusieurs couches d'un sol aqueux ou partiellement aqueux d'un oxyde métallique tel qu'obtenu par le procédé décrit ci-dessus, et le séchage de cette(ces) couche(s).

Conformément à l'invention, le dépôt de la couche ou des couches du sol sur le substrat peut être réalisé par l'une quelconque des techniques classiquement utilisées pour déposer un sol sur un substrat comme, par exemple la pulvérisation (ou *« spray-coating* » en langue anglaise), l'enduction centrifuge (ou « *spin-coating* » en langue anglaise), le dépôt à la goutte (ou « *drop-coating* » en langue anglaise), le trempage-retrait (ou « *dip-coating* » en langue anglaise), l'enduction laminaire (ou « *meniscus-coating* » en langue anglaise), l'épandage (ou « *soak-coating* » en langue anglaise), l'enduction au rouleau (ou *« roll to roll process* » en langue anglaise) ou encore l'enduction au pinceau (ou « *painting-coating »* en langue anglaise).

Parmi ces techniques, on préfère, notamment dans le cas où l'on souhaite réaliser un film mince antireflet, l'enduction centrifuge, le trempage-retrait et l'enduction laminaire, car ce sont celles qui permettent le mieux de contrôler l'épaisseur des couches de sol déposées sur le substrat.

Quelle que soit la technique de dépôt utilisée, le solvant présent dans le sol est éliminé par évaporation, celle-ci pouvant se faire naturellement à l'air libre ou pouvant être facilitée, par exemple par application d'un flux gazeux, par chauffage thermique ou radiatif pour autant que la température n'altère ni le sol, ni le substrat sous-jacent ou encore par des moyens mécaniques tels que la rotation du substrat comme lors d'un dépôt par enduction-centrifuge.

On obtient ainsi un film à forte porosité (supérieure à 50%), dont l'indice de réfraction va de 1,22 à 1,28 et qui présente un pourcentage de transmission optique supérieur à 99%.

Ce film est donc adapté à être utilisé comme film antireflet.

Dans le cas où l'on souhaite lui conférer des propriétés de résistance à l'abrasion, le procédé comprend, de plus, le traitement du film par une base en milieu liquide ou gazeux.

Ce traitement peut notamment être réalisé comme décrit dans la demande de brevet FR-A-2 703 791, déjà citée.

Ainsi, on peut utiliser comme base, de la soude, de la potasse, de l'hydroxyde de tétraméthyl-ammonium, de l'hydroxylamine ou de l'ammoniac(que), et traiter le film soit par une solution de l'une de ces bases, soit par des vapeurs dans le cas de l'ammoniac, ce qui peut être fait en maintenant le substrat recouvert dudit film, par exemple pendant 12 à 24 heures, dans une enceinte hermétiquement close du type dessiccateur, dans laquelle est placée une solution aqueuse d'ammoniac ou que l'on alimente par des vapeurs d'ammoniac.

En l'espèce, on préfère traiter le film par des vapeurs d'ammoniac.

Conformément à l'invention, le film ainsi obtenu peut encore être soumis à un post-traitement propre à améliorer l'une de ses propriétés en fonction de l'usage auquel ce film est destiné.

Ainsi, notamment, il peut être soumis à un post-traitement propre à améliorer son hydrophobicité comme, notamment, un post-traitement par de l'hexa-méthyldisilazane (HMDS) ou de fluorosilanes en milieu liquide ou gazeux.

En milieu liquide, ce post-traitement peut, par exemple, être réalisé en immergeant le film mince dans un sol alcoolique à 5% massique d'HMDS, par exemple pendant 10 à 15 heures et en retirant ensuite ce film du sol à une vitesse de l'ordre de 3 cm/min avec une vitesse d'extraction, tandis que, en milieu gazeux, il peut être réalisé en maintenant le film mince, par exemple pendant 48 heures, dans une enceinte hermétiquement close dans laquelle est placé un sol d'HMDS.

Quoi qu'il en soit, le film est, de préférence, un film mince, c'est-à-dire un film mince qui mesure de 5 à 500 nm d'épaisseur et, mieux encore, de 10 à 250 nm d'épaisseur, et, qui plus est, un film mince de silice.

D'autres caractéristiques et avantages de l'invention ressortiront mieux à la lecture du complément de description qui suit, qui se réfère à des exemples de préparation de sols de silice colloïdale et de films minces par les procédés selon l'invention et de mise en évidence des caractéristiques et propriétés des sols et films ainsi préparés.

Bien entendu, ces exemples ne sont donnés qu'à titre d'illustrations de l'objet de l'invention et ne constituent en aucun cas une limitation de cet objet.

### BRÈVE DESCRIPTION DES DESSINS

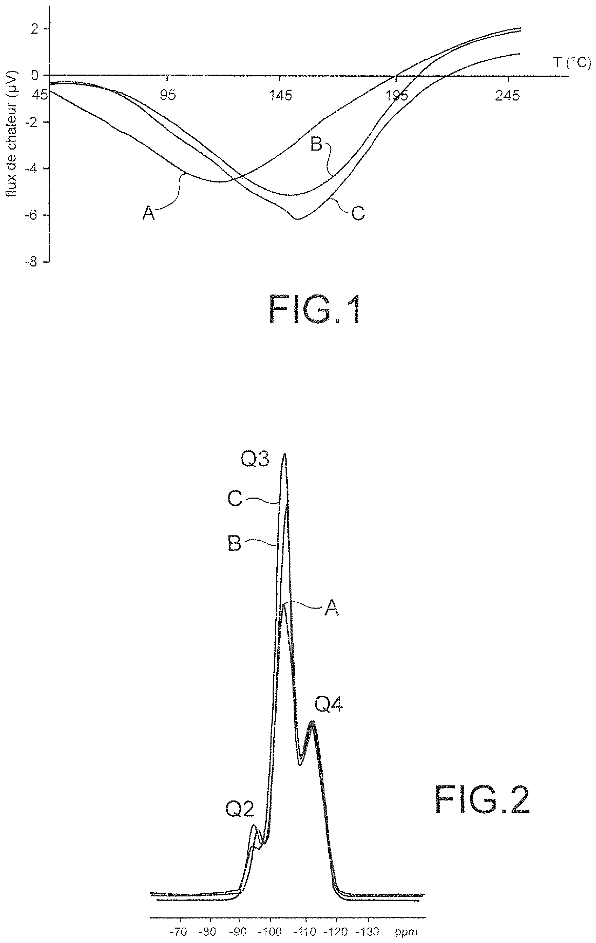

La figure 1 illustre les résultats d'analyses thermiques différentielles réalisées sur des poudres respectivement obtenues à partir de deux sols de silice colloïdale préparés par le procédé selon l'invention (courbes B et C) et du sol alcoolique de silice colloïdale utilisé pour préparer ces sols (courbe A).
La figure 2 représente les spectres RMN CP/MAS ²⁹Si présentés par des poudres respectivement obtenues à partir de deux sols de silice colloïdale préparés par le procédé selon l'invention (courbes B et C) et du sol alcoolique de silice colloïdale utilisé pour préparer ces sols (courbe A).

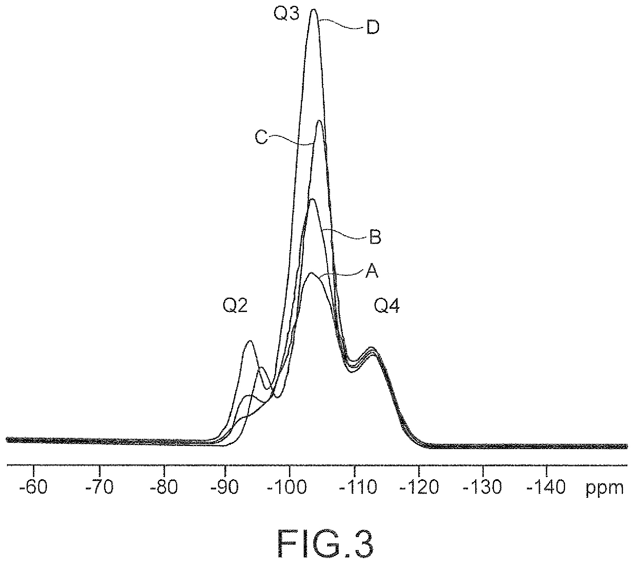

La figure 3 représente les spectres RMN CP/MAS ²⁹Si présentés par des poudres respectivement obtenues à partir d'un sol de silice colloïdale préparé par le procédé selon l'invention (courbe D), du sol alcoolique de silice colloïdale utilisé pour préparer ce sol (courbe B), d'un sol de silice colloïdale préparé par un procédé différent du procédé selon l'invention (courbe C) et du sol alcoolique de silice colloïdale utilisé pour préparer ce sol (courbe A).

### EXPOSÉ DÉTAILLÉ DE MODES DE RÉALISATION PARTICULIERS

Par souci de simplification, les sols de silice colloïdale et les films minces préparés par les procédés selon l'invention seront respectivement dénommés, dans ce qui suit, « *sols selon l'invention »* et « *films minces selon l'invention ».*

### EXEMPLE 1 : Préparation de sols selon l'invention

On prépare, tout d'abord, un sol de silice colloïdale en milieu alcoolique, qui sera dénommé ci-après *SM1,* de pH 9 et de teneur massique en SiO₂ de 3,80%.

Pour ce faire, on mélange 3 880 g d'éthanol absolu à 507 g de tétraorthosilicate (TEOS) dans un flacon sous agitation pendant 15 minutes, puis on ajoute 134 g d'ammoniaque concentré à 28%. On poursuit l'agitation encore 15 minutes après quoi on laisse la solution au repos pour la laisser mûrir.

Les taux d'hydrolyse (H₂O/Si)ₘₒₗ et (OH⁻/ TEOS)ₘₒₗ sont respectivement de 2,2 et de 0,91.

Après 3 semaines de mûrissement, on obtient un sol stable de couleur nacrée, monodisperse, qui présente une viscosité de 1,44 cP et une tension superficielle de 23,40 mN/m et dans lequel les particules de silice ont une taille moyenne de particules de 20 nm.

On prépare ensuite une série de sols selon l'invention en ajoutant, dans un ballon, 200 mL de *SM1* (pH 9) à 200 mL d'un mélange d'eau et d'éthanol absolu dont le rapport massique eau/éthanol est choisi en fonction de la teneur massique en eau devant être présentée par les sols.

Après agitation, on soumet les solutions ainsi obtenues à une évaporation à l'évaporateur rotatif (Rotavapor™) à 40°C, sous une pression de l'ordre de 100 mPa, jusqu'à ramener la teneur massique en SiO₂ des sols aux environ de 3,50%. L'évaporation est conduite au goutte à goutte pour éviter d'évaporer l'eau présente dans le sol.

Puis, on filtre les sols sur un filtre WHATMAN™ en polypropylène de 0,45 µm.

On prépare ainsi :
- un sol à 5% massique d'eau, ci-après dénommé *Sol5,* en utilisant un mélange eau/éthanol 5/95 (m/m) ;
- un sol à 24% massique d'eau, ci-après dénommé *Sol24,* en utilisant un mélange eau/éthanol 24/76 (m/m) ;
- un sol à 41% massique d'eau, ci-après dénommé *Sol41,* en utilisant un mélange eau/éthanol 41/59 (m/m) ;
- un sol à 44% massique d'eau, ci-après dénommé *Sol44,* en utilisant un mélange eau/éthanol 44/56 (m/m) ;
- un sol à 46% massique d'eau, ci-après dénommé *Sol46,* en utilisant un mélange eau/éthanol 46/54 (m/m) ;
- un sol à 65% massique d'eau, ci-après dénommé *Sol65,* en utilisant un mélange eau/éthanol 65/35 (m/m) ;
- un sol à 67% massique d'eau, ci-après dénommé *Sol67,* en utilisant un mélange eau/éthanol 67/33 (m/m) ;
- un sol à 77% massique d'eau, ci-après dénommé *Sol77,* en utilisant un mélange eau/éthanol 77/23 (m/m) ;
- un sol à 87% massique d'eau, ci-après dénommé *Sol87,* en utilisant un mélange eau/éthanol 87/13 (m/m) ; et
- un sol à 91% massique d'eau, ci-après dénommé *Sol91,* en utilisant un mélange eau/éthanol 91/9 (m/m) .

Tous ces sols présentent un pH compris entre 8 et 9.

Leur teneur massique en eau est déterminée à partir d'abaques réalisés sur des mesures de densité par picnométrie et de tension superficielle de différents mélanges eau/éthanol absolu. Elle est donc obtenue par des mesures croisées de densité et de tension superficielle. L'erreur relative est inférieure à 4% sur le pourcentage massique en eau.

A des fins strictement comparatives, on prépare un autre sol alcoolique de silice colloïdale mais qui, lui, présente un pH de 7, en chauffant 1 L de *SM1* au reflux de l'éthanol (79°C) pendant 12 heures afin d'éliminer l'ammoniaque présent dans ce sol. Le sol ainsi obtenu sera dénommé ci-après *SM2.*

Puis, on prépare un sol de teneur massique en eau de 45%, ci-après dénommé *Sol45,* en suivant un protocole opératoire identique à celui décrit ci-dessus pour la préparation des sols selon l'invention, à ceci près que l'on ajoute, dans le ballon, 200 mL de *SM2* à 200 mL d'un mélange eau/éthanol absolu 45/55 (m/m).

Le pH du *Sol45* ainsi obtenu est de 7.

### EXEMPLE 2 : Caractéristiques des sols selon l'invention

### 2.1. Stabilité des sols

On apprécie la stabilité des sols selon l'invention en mesurant leur viscosité le jour de leur préparation, puis à intervalles sur une période d'un an à compter de ce jour.

Ces mesures de viscosité sont réalisées à 21°C, en utilisant un viscosimètre à cylindre de marque Rhéovisco™, modèle ELV-8 et en ayant préalablement soumis les sols à une agitation magnétique pendant 5 minutes.

Le tableau I ci-après donne les valeurs de viscosité telle qu'obtenues pour les *Sol24, Sol44, Sol77* et *Sol91* le jour de leur préparation (t₀) et 20 jours (t_{20 jours}) après et, pour les *Sol44, Sol77* et *Sol91,* six mois (t₆ₘₒᵢₛ) et un an (t₁ₐₙ) après. Y sont également indiquées, à titre comparatif, les valeurs de viscosité obtenues pour le *SM1* utilisé pour préparer ces sols.

**TABLEAU I**

| **Sols** | **Viscosité** (cP) | | | |
|---|---|---|---|---|
| | t₀ | t₂₀ⱼₒᵤᵣₛ | t₆ₘₒᵢₛ | t₁ₐₙ |
| *SM1* | 1,63 | 1,53 | 2,17 | 1,94 |
| *Sol24* | 2,71 | 2,72 | - | - |
| *Sol44* | 3,48 | 3,39 | 3,56 | 4,04 |
| *Sol77* | 3,09 | 2,86 | 2,38 | 2,04 |
| *Sol91* | 2,09 | 1,84 | 1,54 | 1,61 |

Ce tableau montre que la viscosité des sols selon l'invention change peu sur une période d'un an, ce qui traduit une excellente stabilité de ces sols.

### 2.2. Réactivité de surface des particules de silice présentes dans les sols

La réactivité de surface des particules de silice présentes dans les sols est un facteur primordial de la cohésion mécanique des films minces obtenus à partir de ces sols.

Elle est donc appréciée en transformant les sols selon l'invention en poudres, par évaporation de la phase liquide de ces sols obtenue par prélèvement de solution et mis à l'étuve ventilée pendant 24 heures à la température de 21°C, et en soumettant les poudres ainsi obtenues à une série d'analyses dont notamment :
* des analyses thermiques différentielles (ATD),
* des analyses par résonance magnétique nucléaire (RMN) du silicium (²⁹Si) avec une séquence de polarisation croisée couplée à une rotation de l'angle magique (CP/MAS pour « *Cross Polarisation*/*Magic Angle Spinning* »), et
* des analyses texturales par adsorption/ désorption d'azote.

A des fins strictement comparatives, des poudres obtenues à partir du *SM1,* du *SM2* ainsi que du *Sol45,* dans les mêmes conditions que celles précisées ci-dessus, sont également soumises à ces analyses. 2.2.a. Mise en évidence d'une couche d'eau de

### solvatation sur les particules de silice

Les analyses ATD, qui permettent de mesurer l'énergie dégagée ou absorbée par les particules de silice au cours d'un cycle de chauffage, sont réalisées en chauffant les poudres des sols de 30 à 700°C, à raison de 10°C/min et sous atmosphère d'air.

Les résultats sont illustrés sur la figure 1 sous la forme de courbes qui représentent les flux de chaleur, exprimés en microvolts, tels que mesurés entre 45 et 250°C pour les poudres du *Sol41* (courbe B), du *Sol87* (courbe C) et, à titre comparatif, pour la poudre du *SM1* (courbe A).

Cette figure montre que le pic endothermique relatif à l'eau physisorbée sur les particules de silice est situé à des températures plus élevées pour les sols selon l'invention que pour le sol alcoolique *SM1* utilisé pour leur préparation, ce qui traduit une adsorption plus forte de l'eau physisorbée sur les particules de silice présentes dans les sols selon l'invention.

Les analyses RMN ²⁹Si CP/MAS permettent de suivre l'évolution des seuls atomes de silicium proches des protons et, donc, situés à la surface des particules de silice, compte tenu qu'à l'intérieur des particules, il n'existe que des liaisons Si-O-Si. Un transfert des protons vers les atomes de silicium ne peut se produire que si les atomes sont relativement proches spatialement, c'est-à-dire situés à quelques angströms les uns des autres. Ainsi, on observe principalement les atomes de silicium portant 1 groupe hydroxyle (-Si(OH) ou Q3) ou 2 groupes hydroxyles (-Si(OH)₂ ou Q2). On suit l'évolution des pics Q3 (SiOH) et Q2 (Si(OH)₂), le pic Q4, correspondant à un atome de silicium sans liaison hydroxyle, sert de pic de référence avec une aire identique pour toutes les poudres.

La figure 2 illustre les spectres ainsi obtenus pour les poudres du *Sol41* (courbe B), du *Sol87* (courbe C) et, à titre comparatif, pour la poudre du *SM1* (courbe A).

Cette figure montre que l'intensité du pic Q3 augmente lorsque la teneur massique en eau des sols dont sont issues les poudres augmente. On observe donc plus de signal sur les silanols SiOH. Cette augmentation d'intensité du pic Q3 est liée à la présence d'eau liée autour de ces sites.

Les analyses texturales par adsorption/ désorption d'azote permettent, elles, notamment de déterminer la surface spécifique des particules de silice.

Les résultats obtenus pour les poudres du *Sol5,* du *Sol45,* du *Sol87* et, à titre comparatif, pour la poudre du *SM1* sont consignés dans le tableau 2 ci-après.

**TABLEAU 2**

| **Sols** | **Surface spécifique (m²/g)** |
|---|---|
| *SM1* | 482 |
| *Sol5* | 458 |
| *Sol41* | 391 |
| *Sol87* | 336 |

Ce tableau montre que la surface spécifique des particules de silice présentes dans les sols selon l'invention diminue lorsque la teneur massique en eau de ces sols augmente. Cette diminution de surface spécifique correspond à une diminution de l'accessibilité de l'azote à la surface des particules de silice, due à la présence d'une couche d'eau de solvatation autour des particules.

### 2.2.b. Influence de la charge de surface des particules de silice

Afin d'apprécier l'influence de la charge de surface des particules de silice sur la réactivité de surface de ces particules, on compare les spectres RMN ²⁹Si CP/MAS des poudres obtenues à partir du *Sol42* et du *SM1* à ceux des poudres obtenues à partir du *Sol45* et du *SM2.*

On compare aussi les surfaces spécifiques de ces poudres telles que déterminées par adsorption/ désorption d'azote.

Les spectres sont illustrés sur la figure 3, la courbe B correspondant à la poudre du *SM1,* la courbe A à la poudre du *SM2,* la courbe C à la poudre du *Sol45* et la courbe D à la poudre du *Sol46,* tandis que les surfaces spécifiques sont présentées dans le tableau 3 ci-après.

**TABLEAU 3**

| **Sols** | **Surface spécifique (m²/g)** |
|---|---|
| *SM1* | 496 |
| *SM2* | 485 |
| *Sol46* | 327 |
| *Sol45* | 455 |

La figure 2 montre que la poudre obtenue à partir du *SM1* (au pH de 9) présente un pic Q3 d'intensité plus élevée que celle du pic Q3 de la poudre obtenue à partir du *SM2* (au pH de 7).

De manière similaire, la poudre obtenue à partir du *Sol46,* qui a été préparé à partir du *SM1,* présente un pic Q3 d'intensité plus élevée que celle du pic Q3 de la poudre du *Sol45* qui, lui, a été préparé à partir du *SM2* et sans ajustement de son pH à une valeur au moins égale à 8.

La présence d'eau liée aux silanols SiOH situés à la surface des particules de silice est donc d'autant plus importante que le pH d'une part, et la teneur en massique en eau d'autre part, des sols sont plus élevés.

Par ailleurs, le tableau 3 ne montre pas de différence significative entre les surfaces spécifiques présentées par les poudres du *SM1* et du *SM2,* ces surfaces spécifiques se situant aux alentours de 490 m²/g.

Par contre, il montre qu'une augmentation de la teneur massique en eau entraîne une diminution significative de la surface spécifique dans le cas de la poudre du *Sol46* (S = 327 m²/g) mais pas dans le cas de celle du *Sol45* (S = 455 m²/g).

L'adsorption de la couche d'eau de solvatation autour des particules est donc plus forte dans le *Sol46* que dans le *Sol45.*

### EXEMPLE 3 : Réalisation de films minces selon l'invention

### 3.1. Préparation des substrats

On prépare une série de substrats tous identiques, en verre de silice, mesurant 50 mm de diamètre sur 10 mm d'épaisseur. La qualité du polissage est de 1 λ (λ = 1064 nm) et l'indice de réfraction est de 1,45 à 600 nm de longueur d'onde.

Ces substrats sont lavés avec une solution d'acide fluorhydrique diluée à 1% en volume. Ils sont ensuite rincés à l'eau désionisée, nettoyés avec une solution détergente de savon végétal (Green Soap™ de la société ELLI LILLY Co.), puis rincés à nouveau successivement à l'eau pure et à l'éthanol absolu.

### 3.2. Dépôt des sols sur les substrats

Les dépôts des sols sur les substrats sont réalisés en salle blanche afin d'éviter une pollution particulaire et de garantir une reproductibilité d'un échantillon à l'autre. La température de la salle est de 21 ± 1°C tandis que son degré d'humidité est de 45 ± 5°C.

Par ailleurs, ces dépôts sont réalisés par enduction centrifuge en utilisant une tournette (ou « *spin-coater* ») CONVAC, modèle CONVAC™ 1001. Les sols sont injectés sur les substrats en rotation au moyen d'une seringue de 2 mL munie d'un filtre WHATMANN™ en polypropylène de 0,45 µm. Les deux faces d'un même substrat sont recouvertes du même sol.

Pour chaque sol, la vitesse de rotation du substrat et le nombre de couches déposées sur les deux faces du substrat sont réglées de sorte à obtenir un film mince de 200 nm environ d'épaisseur, ce qui correspond à un spectre de transmission à un pic maximum λ/4 situé à 1000 nm.

A titre illustratif, le tableau 4 ci-après présente les vitesses de rotation des substrats utilisées pour réaliser les dépôts de différents sols selon l'invention ainsi que l'épaisseur des films minces respectivement obtenus.

**TABLEAU 4**

| **Sols** | **Vitesse de rotation** (tours/min) | **Epaisseur** (nm) |
|---|---|---|
| *Sol5* | 2100 | 195 |
| *Sol41* | 1700 | 210 |
| *Sol46* | 1700 | 180 |
| *Sol65* | 3000 | 200 (en 2 couches) |
| *Sol67* | 3500 | 184 (en 2 couches) |
| *Sol87* | 3000 | 200 (en 2 couches) |

A des fins strictement comparatives, on prépare également des films minces par dépôt du *SM1,* du *SM2* et du *Sol45* sur des substrats préparés comme décrit ci-dessus et dans les mêmes conditions opératoires que celles utilisées pour le dépôt des sols selon l'invention. A titre illustratif, les vitesses de rotation des substrats utilisées pour réaliser les dépôts de ces trois sols ainsi que les épaisseurs des films minces obtenus sont présentées dans le tableau 5 ci-après.

**TABLEAU 5**

| **S**o**l**s | **Vitesse de rotation** (tours/min) | **Epaisseur** (nm) |
|---|---|---|
| *SM1* | 2200 | 187 |
| *SM2* | 2200 | 190 |
| *Sol45* | 1700 | 184 |

### 3.3. Traitement des films minces par des vapeurs d'ammoniac

On traite des films minces obtenus comme décrit au point 3.2 du présent exemple par des vapeurs d'ammoniac en maintenant ces films pendant 17 heures dans un dessiccateur dans lequel est placée une solution aqueuse d'ammoniaque à 28%.

### 3.4. Post-traitement par l'hexaméthyldisilazane de films minces préalablement traités par l'ammoniac

On traite des films minces préalablement traités par des vapeurs d'ammoniac comme décrit au point 3.3 du présent exemple par des vapeurs d'hexaméthyldisilazane (HMDS) de formule (CH₃)₃-Si-NH-Si-(CH₃)₃, en maintenant ces films pendant 48 heures dans un dessiccateur dans lequel est placé un cristallisoir contenant de l'HMDS pur.

### EXEMPLE 4 : Propriétés des films minces selon l'invention

### 4.1. Films minces traités par des vapeurs d'ammoniac

On apprécie les propriétés optiques et de résistance à l'abrasion des films minces traités par l'ammoniac en soumettant ces films, avant et après ce traitement, à :
* d'une part, des mesures optiques en transmission sur un spectrophotomètre PERKIN-ELMER™ Lambda 19 dans la gamme spectrale 200-1500 nm qui permettent de déterminer, pour chaque film, le pourcentage de transmission à λ/4 = 1000 nm, son épaisseur et son indice de réfraction (n), et
* d'autre part, un test de résistance à l'abrasion « *modéré* » selon la norme US-MIL-C-0675C qui permet de déterminer le nombre d'allers retours que doit effectuer une gomme abrasive sur la surface d'un film pour obtenir la destruction complète de ce film, c'est-à-dire la mise à nu du substrat sous-jacent, et en comparant les résultats obtenus.

Le tableau 6 ci-après présente les pourcentages de transmission (%T) à λ/4, les indices de réfraction (n), les épaisseurs (e) et le nombre d'allers retours (A/R) tels que déterminés, avant et après traitement ammoniacal, pour des films minces réalisés avec des sols selon l'invention, à savoir les *Sol5, Sol41, Sol46, Sol67* et *Sol87,* et, à titre comparatif, pour des films minces réalisés avec le *SM1,* le *SM2* et le *Sol45.*

**TABLEAU 6**

| **Sols** | **%T à λ/4** | | **n** | | **e** (nm) | | **A/R** | |
|---|---|---|---|---|---|---|---|---|
| | **Avant** | **Après** | **Avant** | **Après** | **Avant** | **Après** | **Avant** | **Après** |
| *SM1* | 99,89 | 99,98 | 1,22 | 1,22 | 209 | 181 | 1 | 4 |
| *Sol5* | 99,84 | 99,99 | 1,22 | 1,22 | 221 | 216 | 1 | 8 |
| *So141* | 99,73 | 99,76 | 1,25 | 1,25 | 178 | 172 | 1 | 35 |
| *Sol46* | 99,83 | 99,76 | 1,24 | 1,24 | 195 | 195 | 1 | 35 |
| *Sol67* | 99,74 | 99,77 | 1,25 | 1,25 | 177 | 170 | 1 | 40 |
| *Sol87* | 99,68 | 99,34 | 1,26 | 1,28 | 172 | 169 | 1 | 40 |
| *SM2* | 99,90 | 99,81 | 1,22 | 1,24 | 200 | 185 | 1 | 3 |
| *Sol45* | 99,91 | 99,83 | 1,22 | 1,25 | 210 | 210 | 1 | 5 |

Ce tableau montre, tout d'abord, que la présence d'eau dans des sols de silice colloïdale se traduit - sauf dans le cas où cette teneur est très faible (*Sol5*) - par une légère augmentation de l'indice de réfraction des films minces réalisés avec ces sols.

Il montre aussi qu'un traitement ammoniacal peut avoir pour effet d'augmenter encore légèrement cet indice de réfraction mais que celui-ci reste, en tout état de cause, inférieur à 1,29 pour le film mince réalisé avec le sol selon l'invention présentant la teneur massique la plus élevée en eau (*Sol87*), ce qui est tout à fait compatible avec une utilisation des films minces selon l'invention en tant que films antireflets.

Il montre également qu'en l'absence de traitement ammoniacal, les films minces réalisés avec des sols selon l'invention ne présentent pas une résistance à l'abrasion supérieure à celle du film mince réalisé avec le sol alcoolique *SM1* ayant servi à la préparation de ces sols.

Par contre, après traitement ammoniacal, les films minces réalisés avec des sols selon l'invention montrent une augmentation spectaculaire de leur résistance à l'abrasion que l'on n'observe ni pour le film mince réalisé avec le sol alcoolique *SM1,* ni pour le film mince réalisé avec le sol alcoolique *SM2* de pH 7, ni pour le film mince réalisé avec le *Sol45* qui a été préparé à partir du *SM2.*

### 4.2. Films minces traités par des vapeurs d'ammoniac puis post-traités par des vapeurs d'hexaméthyldisilazane

On apprécie l'effet d'un post-traitement par l'HMDS en soumettant des films minces selon l'invention, avant traitement ammoniacal, après traitement ammoniacal et après post-traitement par l'HMDS, non seulement aux mesures optiques en transmission et au test de résistance à l'abrasion précédemment mentionnés au point 4.3 du présent exemple, mais également à des mesures de l'angle de contact, et en comparant les résultats obtenus.

Les mesures de l'angle de contact sont réalisées avec un goniomètre GBX, modèle DGD-Fast/60, et consistent à mesurer l'angle de contact formé par une goutte d'eau désionisée lorsque cette goutte est déposée sur la surface d'un film mince. Plus la valeur de cet angle est élevée, c'est-à-dire supérieure à 90°, plus la surface du film est hydrophobe.

A titre illustratif, le tableau 7 ci-après présente les pourcentages de transmission (%T) à λ/4, les indices de réfraction (n), les épaisseurs (e), le nombre d'allers retours (A/R) et les angles de contact (θ) tels que déterminés, avant traitement ammoniacal, après traitement ammoniacal et après post-traitement par l'HMDS, pour un film mince réalisé avec un sol selon l'invention, en l'espèce le *Sol65.*

**TABLEAU 7**

| | **%T à λ/4** | **n** | **e** (nm) | **A/R** | **θ** (°) |
|---|---|---|---|---|---|
| **Avant traitement par NH₃** | 99,75 | 1,25 | 196 | 1 | 8 |
| **Après traitement par NH₃** | 99,39 | 1,27 | 196 | 40 | 65 |
| **Après traitements par NH₃ et HMDS** | 98,96 | 1,30 | 195 | 20 | 126,5 |

Ce tableau montre qu'un post-traitement par l'HMDS entraîne une augmentation de l'indice de réfraction du film mince de *Sol65* de 1,27 à 1,30 situant le pic de transmission autour de 99% à λ/4 = 1000 nm.

Il montre également que ce post-traitement entraîne une diminution de la résistance à l'abrasion du film de *Sol65* puisque celle-ci passe de 40 allers retours à 20 allers retours. Toutefois, la résistance à l'abrasion reste bien supérieure à celle d'un film mince de *Sol65* n'ayant subi aucun traitement.

Quant à l'hydrophobicité de surface, on constate qu'elle est largement améliorée à la fois par le traitement ammoniacal, puis par le post-traitement par l'HMDS puisque l'angle de contact passe successivement de 8 à 65°, puis de 65° à 126,5°.

### REFERENCES CITEES

[1] FR-A-2 703 791
[2] Gulley et al. (Journal of Colloid and Interface Science, 241 (2001) 340-345
[3] Neel et al. (Journal of Colloid and Interface Science, 230 (2000) 244-253

## Revendications

1. Procédé de préparation d'un sol d'un oxyde métallique, aqueux ou partiellement aqueux et de pH supérieur ou égal à 8, présentant une teneur massique en eau supérieure à 20%, lequel procédé comprend :
(a) l'hydrolyse d'un précurseur dudit oxyde métallique à un pH allant de 8 à 14 dans un alcool ou un mélange d'alcools additionné d'une base ;
(b) le mûrissement du sol obtenu à l'étape a) à température ambiante ;
(c) le remplacement par de l'eau de tout ou partie de l'alcool ou des alcools présents dans le sol basique obtenu à l'étape b), ce remplacement comprenant :
(c₁) la dilution de ce sol par addition d'un mélange d'eau et d'un ou plusieurs alcools pour obtenir un sol hydroalcoolique, puis
(c₂) la concentration du sol hydroalcoolique ainsi obtenu, dans des conditions qui permettent d'éliminer de ce sol tout ou partie de l'alcool ou des alcools qu'il renferme sans en éliminer l'eau, pour obtenir un sol aqueux ou partiellement aqueux ; et éventuellement
(d) l'ajustement du pH du sol aqueux ou partiellement aqueux ainsi obtenu à une valeur d'au moins 8.

2. Procédé selon la revendication 1, dans lequel l'étape (c₂) est réalisée par évaporation de l'alcool ou des alcools dans un évaporateur rotatif, à une température allant de 20 à 55°C et sous une pression allant de 20 à 200 mPa.

3. Procédé selon la revendication 1 ou 2, dans lequel l'alcool est de l'éthanol absolu.

4. Procédé selon l'une quelconque des revendications précédentes, dans lequel le sol aqueux ou partiellement aqueux d'oxyde métallique est un sol de silice, de zircone, d'alumine ou d'oxyde de titane, et, de préférence, de silice.

5. Procédé selon la revendication 4, dans lequel le sol alcoolique est préalablement obtenu par hydrolyse-condensation d'un précurseur d'oxyde métallique de formule AₓM_{y} dans laquelle M représente un métal ou un métalloïde choisi parmi le silicium, le zirconium, l'aluminium et le titane, tandis que A représente un groupe hydrolysable choisi dans le groupe comprenant un halogénure, un nitrate, un oxalate, un carbonate, un sulfate, un alcoolate de formule R-O⁻ où R est un groupe alkyle linéaire ou ramifié ou un groupe phényle.

6. Procédé selon la revendication 5, dans lequel le groupe alkyle est un groupe en C₁ à C₁₀ et, mieux encore, en C₁ à C₃.

7. Procédé selon la revendication 5 ou la revendication 6, dans lequel le précurseur d'oxyde métallique est choisi parmi le tétraméthoxysilane et le tétraéthoxysilane.

8. Procédé selon l'une quelconque des revendications précédentes, dans lequel le sol aqueux ou partiellement aqueux d'oxyde métallique présente une teneur massique en oxyde métallique allant de 1 à 10% et, mieux encore, de 2 à 6%.

9. Procédé selon l'une quelconque des revendications précédentes, dans lequel le sol aqueux ou partiellement aqueux d'oxyde métallique présente une teneur massique en eau supérieure à 40%.

10. Procédé selon l'une quelconque des revendications précédentes, dans lequel le sol aqueux ou partiellement aqueux d'oxyde métallique présente un pH allant de 8 à 10 et, mieux encore, de 9 ± 0,3.

11. Procédé de fabrication d'un film, qui comprend la préparation d'un sol aqueux ou partiellement aqueux d'un oxyde métallique par un procédé selon l'une quelconque des revendications 1 à 10, le dépôt sur l'une ou les deux faces d'un substrat d'une ou plusieurs couches de ce sol et le séchage de cette(ces) couche(s).

12. Procédé selon la revendication 11, qui comprend, de plus, un traitement du film par une base en milieu liquide ou gazeux et, de préférence, par des vapeurs d'ammoniac.

13. Procédé selon la revendication 12, qui comprend, en outre, un post-traitement du film par de l'hexaméthyldisilazane en milieu liquide ou gazeux.

14. Procédé selon la revendication 11 ou la revendication 12, dans lequel le film est un film mince qui mesure de 5 à 500 nm d'épaisseur et, mieux encore, de 10 à 250 nm.

15. Procédé selon l'une quelconque des revendications 11 à 14, dans lequel le film est un film mince de silice.

## Patentansprüche

1. Verfahren zur Herstellung eines Sols eines Metalloxids, wässrig oder teilweise wässrig und mit einem pH oberhalb von oder gleich 8, welches einen Massegehalt von Wasser oberhalb von 20 % aufweist, wobei das Verfahren umfasst:
(a) die Hydrolyse eines Vorläufers des Metalloxids bei einem pH von 8 bis 14 in einem Alkohol oder einer Mischung von Alkoholen, zu welchem/welcher eine Base hinzugegeben wurde,
(b) Reifenlassen des Sols, welches in Schritt a) erhalten wurde, bei Umgebungstemperatur,
(c) vollständiges oder teilweises Ersetzen des Alkohols oder der Alkohole vorhanden in dem basischen Sol, welches in Schritt b) erhalten wurde, durch Wasser, wobei das Ersetzen umfasst:
(c₁) Verdünnen des Sols durch Hinzufügen einer Mischung von Wasser und einem oder mehreren Alkoholen, um ein hydroalkoholisches Sol zu erhalten, dann
(c₂) Konzentrieren des so erhaltenen hydroalkoholischen Sols unter Bedingungen, welche erlauben, aus dem Sol den ganzen oder einen Teil des Alkohols oder der Alkohole, welchen es enthält, zu entfernen, ohne das Wasser zu entfernen, um ein wässriges oder teilweise wässriges Sol zu erhalten, und gegebenenfalls
(d) Anpassen des pHs des so erhaltenen wässrigen oder teilweise wässrigen Sols auf einen Wert von wenigstens 8.

2. Verfahren gemäß Anspruch 1, in welchem der Schritt (c₂) durch Verdampfen des Alkohols oder der Alkohole in einem Rotationsverdampfer bei einer Temperatur von 20 und 55 °C und unter einem Druck von 20 bis 200 mPa durchgeführt wird.

3. Verfahren gemäß Anspruch 1 oder 2, in welchem der Alkohol absolutes Ethanol ist.

4. Verfahren gemäß einem der vorhergehenden Ansprüche, in welchem das wässrige oder teilweise wässrige Sol eines Metalloxids ein Sol von Siliziumdioxid, Zirkoniumoxid, Aluminiumoxid oder Titanoxid ist und vorzugsweise von Siliziumdioxid.

5. Verfahren gemäß Anspruch 4, in welchem das alkoholische Sol vorzugsweise erhalten wird durch Hydrolyse-Kondensation eines Metalloxidvorläufers der Formel AₓM_{y}, in welchem M ein Metall oder ein Metalloid darstellt, ausgewählt aus Silizium, Zirkonium, Aluminium und Titan, während A eine hydrolysierbare Gruppe darstellt, ausgewählt aus der Gruppe umfassend ein Halogenid, ein Nitrat, ein Oxalat, ein Carbonat, ein Sulfat, ein Alkoholat der Formel R-O⁻, wobei R eine lineare oder verzweigte Alkylgruppe oder eine Phenylgruppe ist.

6. Verfahren gemäß Anspruch 5, in welchem die Alkylgruppe eine C₁-C₁₀-Gruppe ist, noch besser eine C₁-C₃-Gruppe.

7. Verfahren gemäß Anspruch 5 oder Anspruch 6, in welchem der Metalloxidvorläufer ausgewählt ist aus Tetramethoxysilan und Tetraethoxysilan.

8. Verfahren gemäß einem der vorhergehenden Ansprüche, in welchem das wässrige oder teilweise wässrige Sol eines Metalloxids einen Massegehalt an Metalloxid von 1 bis 10 % und noch besser von 2 bis 6 % aufweist.

9. Verfahren gemäß einem der vorhergehenden Ansprüche, in welchem das wässrige oder teilweise wässrige Sol eines Metalloxids einen Massegehalt an Wasser oberhalb von 40 % aufweist.

10. Verfahren gemäß einem der vorhergehenden Ansprüche, in welchem das wässrige oder teilweise wässrige Sol eines Metalloxids einen pH von 8 bis 10 und noch besser von 9 ± 0,3 aufweist.

11. Verfahren zur Herstellung eines Films, welches die Herstellung eines wässrigen oder teilweise wässrigen Sols eines Metalloxids durch ein Verfahren gemäß einem der Ansprüche 1 bis 10, das Aufbringen einer oder mehrerer Schichten dieses Sols auf eine oder beide Seiten eines Substrats und das Trocknen dieser Schicht (dieser Schichten) umfasst.

12. Verfahren gemäß Anspruch 11, welches außerdem die Behandlung des Films durch eine Base in wässrigem oder gasförmigem Milieu, vorzugsweise durch Ammoniakdämpfe, umfasst.

13. Verfahren gemäß Anspruch 12, welches außerdem eine Nachbehandlung des Films durch Hexamethyldisilazan in wässrigem oder gasförmigem Milieu umfasst.

14. Verfahren gemäß Anspruch 11 oder Anspruch 12, in welchem der Film ein dünner Film ist, welche eine Dicke von 5 bis 500 nm aufweist und noch besser von 10 bis 250 nm.

15. Verfahren gemäß einem der Ansprüche 11 bis 14, in welchem der Film ein dünner Siliziumdioxidfilm ist.

## Claims

1. Method for preparing an aqueous or partly aqueous sol of a metal oxide and with a pH greater than or equal to 8, having a water mass content greater than 20%, which method comprises:
(a) hydrolyzing a precursor of said metal oxide at a pH ranging from 8 to 14 in an alcohol or a mixture of alcohols added with a base;
(b) ripening the sol obtained at step a) at room temperature;
(c) replacing with water all or part of the alcohol or the alcohols present in the basic sol obtained at step b), this replacing comprising:
(c₁) diluting this sol by adding a mixture of water and of one or several alcohols to obtain a hydroalcoholic sol, then
(c₂) concentrating the thereby obtained hydroalcoholic sol, under conditions which allow removal from this sol of all or part of the alcohol or of the alcohols which it contains without removing water therefrom, to obtain an aqueous or partly aqueous sol; and optionally
(d) adjusting the pH of the thereby obtained aqueous or partly aqueous sol to a value of at least 8.

2. Method according to claim 1, wherein step (c₂) is carried out by evaporating the alcohol or the alcohols in a rotary evaporator, at a temperature ranging from 20 to 55°C and under a pressure ranging from 20 to 200 mPa.

3. Method according to claim 1 or 2, wherein the alcohol is absolute ethanol.

4. Method according to any of the preceding claims, wherein the aqueous or partly aqueous metal oxide sol is a sol of silica, zirconia, alumina or titanium oxide and, preferably, of silica.

5. Method according to claim 4, wherein the alcoholic sol is obtained beforehand by hydrolysis-condensation of a metal oxide precursor of formula AₓM_{y} wherein M represents a metal or a metalloid selected from silicon, zirconium, aluminum and titanium, while A represents a hydrolyzable group selected from the group comprising a halide, a nitrate, an oxalate, a carbonate, a sulfate, an alcoholate of formula R-O⁻ wherein R is a linear or branched alkyl group or a phenyl group.

6. Method according to claim 5, wherein the alkyl group is a C₁-C₁₀ group and, still better, a C₁-C₃ group.

7. Method according to claim 5 or claim 6, wherein the metal oxide precursor is selected from tetramethoxysilane and tetraethoxysilane.

8. Method according to any of the preceding claims, wherein the aqueous or partly aqueous metal oxide sol has a metal oxide mass content ranging from 1 to 10% and, still better, from 2 to 6%.

9. Method according to any of the preceding claims, wherein the aqueous or partly aqueous metal oxide sol has a water mass content greater than 40%.

10. Method according to any of the preceding claims, wherein the aqueous or partly aqueous metal oxide sol has a pH ranging from 8 to 10 and, still better, of 9 ± 0.3.

11. Method for making a film, which comprises preparing an aqueous or partly aqueous sol of a metal oxide by a method according to any of claims 1 to 10, depositing on one or both faces of a substrate one or several layers of this sol and drying this(these) layer(s).

12. Method according to claim 11, which further comprises a treatment of the film with a base in a liquid or gas medium and, preferably, with ammonia vapors.

13. Method according to claim 12, which further comprises a posttreatment of the film with hexamethyldisilazane in a liquid or gas medium.

14. Method according to claim 11 or claim 12, wherein the film is a thin film which measures from 5 to 500 nm in thickness and, still better, from 10 to 250 nm.

15. Method according to any of claims 11 to 14, wherein the film is a thin silica film.
